# EUROPEAN PATENT SPECIFICATION

(11) **EP 2 009 936 B1**
(45) Date of publication and mention of the grant of the patent: **21.03.2012**
(21) Application number: 06840680.0
(22) Date of filing: 28.12.2006
(51) Int. Cl.: H04W 84/08, H04L 29/06, H04L 29/08

(54) **METHOD, SYSTEM AND DEVICE FOR REALIZING GROUP TALK QoE**
VERFAHREN, SYSTEM UND GERÄT ZUR VERWIRKLICHUNG VON GROUP-TALK-QoE
PROCÉDÉ, SYSTÈME ET DISPOSITIF PERMETTANT DE RÉALISER UNE QUALITÉ D'EXPÉRIENCE (QOE) DE CONVERSATION DE GROUPE

(30) Priority: 19.05.2006 CN 200610081659
(43) Date of publication of application: 31.12.2008
(73) Proprietor: Huawei Technologies Co., Ltd., Longgang District, Shenzhen Guangdong 518129 (CN)
(72) Inventor: BAO, Hongqing, Shenzhen Guangdong 518129 (CN); SUN, Qian, Shenzhen Guangdong 518129 (CN); ZHAO, Yang, Shenzhen Guangdong 518129 (CN); TIAN, Linyi, Shenzhen Guangdong 518129 (CN); PENG, Chenghui, Shenzhen Guangdong 518129 (CN); SONG, Xuefei, Shenzhen Guangdong 518129 (CN)
(74) Representative: Kreuz, Georg Maria
(86) International application number: PCT/CN2006/003638
(87) International publication number: WO 2007/134502

(56) References cited:
- WO-A-2004/075581
- WO-A1-2005/022852
- WO-A1-2006/020834
- KR-A- 20060 008 821
- ROSENBERG CISCO SYSTEMS J: "A Framework for Conferencing with the Session Initiation Protocol (SIP); rfc4353.txt" IETF STANDARD, INTERNET ENGINEERING TASK FORCE, IETF, CH, 1 February 2006 (2006-02-01), XP015044786 ISSN: 0000-0003
- ROSENBERG CISCO SYSTEMS H SCHULZRINNE COLUMBIA UNIVERSITY O LEVIN J ET AL: "A Session Initiation Protocol (SIP) Event Package for Conference State; draft-ietf-sipping-conference-package-12.t xt" IETF STANDARD-WORKING-DRAFT, INTERNET ENGINEERING TASK FORCE, IETF, CH, vol. sipping, no. 12, 1 July 2005 (2005-07-01), XP015040700 ISSN: 0000-0004

## Description

### Field of the Invention

The present invention relates to the field of communication technologies and in particular to a method, system and device for implementing Quality of Experience of a group session.

### Background of the Invention

With the development of media compression and wireless network technologies, stream media technologies have been more and more widely used. Although bandwidth in wireless networks are increasing, unlike a fixed network, inherent factors in wireless networks, such as a package loss ratio, jitter, time delay, may have an influence upon user's application experience. Consequently, for various media services, it is an important requirement to improve user's Quality of Experience (QoE). The Quality of experience refers to a degree to which a service satisfies the expectation of a user, and it primarily evaluates service performance from the point of view of a user. User's Quality of Experience of a service involves various aspects, such as Quality of Service (QoS) and priorities.

The Quality of Experience may be a single user's Quality of Experience, or may be a group's Quality of Experience, in which a group is consisted of a plurality of users. A group's QoE may be understood as requirements for quality of group service that are related to respective user members in the group, and different QoEs of the group represent different requirements of the group for service experience.

For example, the Push to Talk over Cellular (PoC) introduces point-to-point and point-to-multipoint voice communication services in a cellular network. It enables a user to enjoy popular bidirectional wireless talk-back services with the use of a mobile phone, and thereby facilitates mobile services and provides a new business opportunity in the voice communication field.

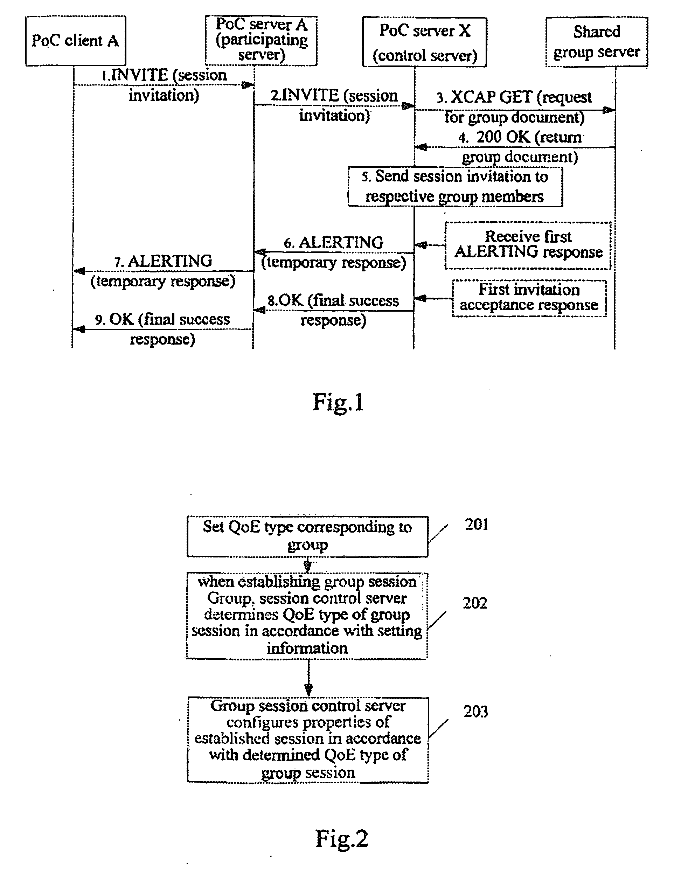

A typical flow of a PoC group session in the prior art is as illustrated in Fig.1.

1. A PoC client A initiates a group session request;

2. A PoC server A sends the group session request to a PoC server X;

3. The PoC server X requests a shared group server for a group document of the group;

4. The shared group XML Document Management (XDM) server returns the group document in a response message;

5. The PoC server X sends session invitation messages to respective members;

6. The PoC server X, upon receipt of a first ALERTING response, returns a response message ALERTING to the PoC server A;

7. The PoC server A sends the response message ALERTING to the PoC client A;

8. The PoC server X. upon receipt of a first invitation acceptance response message, returns an invitation acceptance response message to the PoC server A;

9. The PoC server A returns an invitation acceptance response message to the PoC client A.

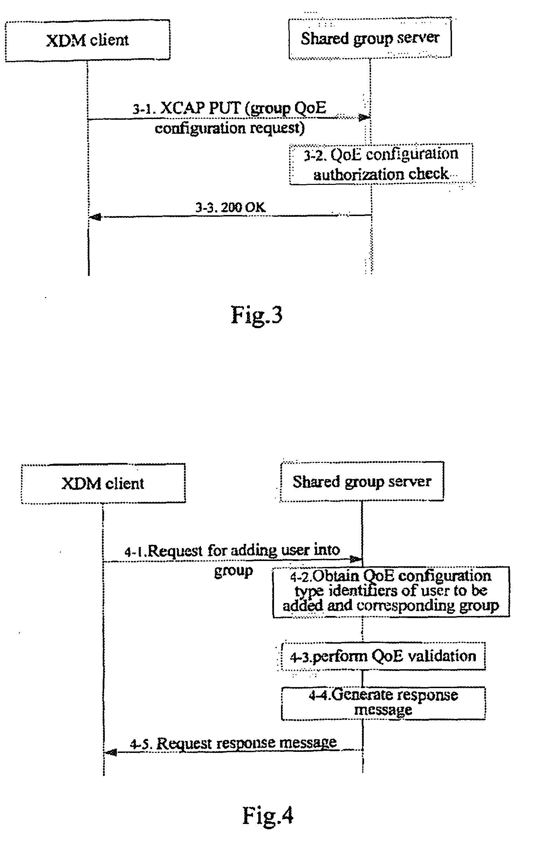

In the PoC, different groups have different requirements for Quality of Experience, so it is required that the system can differentially process QoEs of different groups, however, the existing PoC system provides no corresponding processing mechanism.
The document, ROSENBERG CISCO SYSTEM J: "A Framework for Conferencing with the Session Initiation Protocol (SIP); rfc 4353.txt" IETF STANDARD, INTERNET ENGINEERING TASK FORCE, IETF, CH, 1 February 2006 (2006-02-01), XP015044786 ISSN:0000-0003, discloses communications sessions with multiple participants. This document defines a framework for how such conferencing can occur. This framework describes the overall architecture, terminology, and protocol components needed for multiparty conferencing.
The document, ROSENBERG CISCO SYSTEMS H SCHULZRINNE COLUMBIA UNIVERSITY O LEVIN J ET AL: "A Session Initiation Protocol (SIP) Event Package for Conference State; drafe-ietf-sipping-conference-package-12.txt" IETF STANDARD-WORKING-DRAFT, INTERNET ENGINEERING TASK FORCE, IETF, CH, vol, sipping, no. 12, 1 July 2005 (2005-07-01), XY015040700 ISSN:0000-0004, defines a conference event package for tightly coupled conferences using the Session Initiation Protocol (SIP) Events framework, along with a data format used in Fig.4 is a flow chart of a method in which a user is added into a group through an XDM client according to one embodiment of the invention;

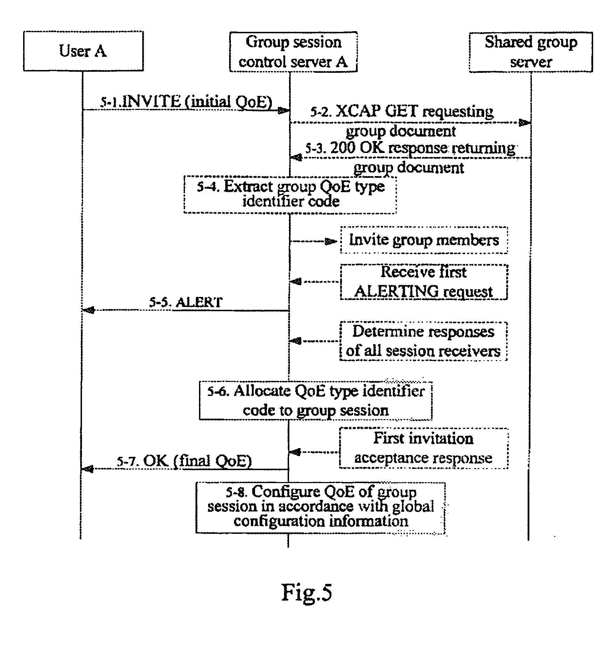

Fig. 5 is a flow chart of a user initiating a group session request in a method according to one embodiment of the invention;
notifications for this package. The conference package allows users to subscribe to a conference URI. Notifications are sent about changes in the membership of this conference and optionally about changes in the state of additional conference components.
The patent application WO 2004/075581 A discloses a Multimedia system and a method in a Multimedia system where a first user with user equipment uses a Push to talk service (PTT) to communicate with at least one second subscriber's user equipment using said Push to talk service (PTT), wherein a PTT-server providing the PTT-service interacts with said first and second subscriber's user equipment, and exchanges information concerning relevant parameter values for each user equipment, and each user equipment adapting its application settings during the operation of said PTT-service, whereby degradation of the perceived quality is prevented.

### Summary of the Invention

A primary object of the invention is to provide a method and system for implementing Quality of Experience of a group session, to achieve differentiated services for different groups.

Another object of the invention is to provide a group session control server to implement differentiated group session services.

Therefore, embodiments of the invention provide the following solutions.

A method for implementing Quality of Experience of a group session includes the steps of:
receiving (5-1), by a group session control server, a request message for a group session initiated by a inviting user, wherein the request message includes an initial QoE type code;

determining (5-6), by the group session control server, a final QoE type of the group session in accordance with preset QoE type information corresponding to the group and the initial QoE type code, when establishing a group session;

configuring (5-8), by the group session control server, properties of the established session in accordance with the final QoE type corresponding to the group session; and
sending (6-4), by the group session control server, a group session invitation message including the final QoE type of the group session to invited users..

A system for implementing Quality of Experience of a group session includes:

a user device (S1), adapted to initiate a request message for a group session, wherein the request message includes an initial QoE type code;;

a shared group server (S2), adapted to store group information including lists of group members and QoE type information corresponding to the group; and

a group session control server (S3), adapted to determine a final QoE type of the group session in accordance with the QoE type information corresponding to the group stored in the shared group server and the initial QoE type code, when the group session is established; to configure properties of the established group session in accordance with the final QoE type corresponding to the group; and to send a group session invitation message including the final QoE type of the group session to invited users.

(Deleted)

(Deleted)

(Deleted)

(Deleted)

As can be seen from the above solutions provided according to the embodiments of the invention, the invention sets a group QoE type in group information and thus can configure properties of an established group session in accordance with the QoE type corresponding to the group when the session is established. The group session service property is controlled in accordance with the QoE property so as to implement differentiated group session services effectively.

### Brief Description of the Drawings

Fig.1 is a typical flow chart of a PoC group session in the prior art;

Fig.2 is a flow chart of a method for implementing Quality of Experience of a group session according to one embodiment of the invention;

Fig.3 is a flow chart of a method in which a group QoE type is configured through an XDM client according to one embodiment of the invention;

Fig.6 is a flow chart of a receiver accepting a group session invitation in a method according to one embodiment of the invention;

Fig.7 is a principle diagram of a system for implementing Quality of Experience of a group session according to one embodiment of the invention;

Fig.8 is a principle diagram of a group session control server according to one embodiment of the invention;

Fig.9 is a flow chart of adding a user into a group during a PoC group session application according to one embodiment of the invention;

Fig.10 is a flow chart of a user initiating a PoC group session during a PoC group session application according to one embodiment of the invention; and

Fig.11 is a flow chart of a user initiating an IM group session during an IM group session application according to one embodiment of the invention.

### Detailed Description of the Invention

The invention will be further described in details hereinafter with reference to the drawings and embodiments, for better understanding of the technical solutions of the present invention by those skilled in the art.

With reference to Fig.2, it illustrates a flow chart of a method for implementing Quality of Experience of a group session according to one embodiment of the invention. The method includes the following steps:

Step 201: set QoE types corresponding to groups.

QoE type identifiers corresponding to respective groups can be configured directly in a shared group server or by a group administrator through an XML Document Management (XDM) client. In other words, QoE type identification information corresponding to the respective groups is added in the group information stored in a shared group server. According to practical application requirements, the QoE type identification information to be configured for the respective groups may also been stored in a group session control server, and when requesting establishment of a group session, a user may conveniently obtain the QoE type identifier corresponding to the group and thereby determine properties of the group session to be established.

For example, an element of <qoe-profile-group> is added into the shared group server to indicate a configured QoE type, the value of which is defined as follows:

Basic type , indicating a basic QoE;

Professional type, indicating a professional QoE;

Crisis type, indicating a critical QoE;

Official Government Use type, indicating an official application QoE.

The above QoE types are sequenced in an ascending order of level as follows: Basic, Profession, Crisis and Official Government Use.

Alike, when the group information is required to be modified, user information may be added directly into the group information stored in the shared group server, or the user information may be added into the group information stored in the shared group server through the XDM client.

A specific procedure will be described in detail below in which a group QoE type identifier is configured in the shared group server through the XDM client and a user is added into a group stored at the shared group server through the XDM client.

Step 202: When establishing a group session, the group session control server determines a QoE type of the group session according to configured information.

When a group session is established, it may be that a preset group QoE type is directly used as a QoE type of the present session, or that a QoE type that meets requirements is determined for the group session under comprehensive consideration of the group QoE type and QoE types to which respective group members subscribe. Practically, it also may be that an initial group QoE type is designated by a session initiator, and the group session control server determines a QoE type identifier of the group session in accordance with the initial group QoE type, the group configured information and the member subscription information, a specific procedure of which will be detailed below.

Step 203: The group session control server configures properties of the established session in accordance with the determined QoE type of the group session.

QoE mapping information may be configured on the group session control server in advance, and the QoE mapping information includes QoE type identifier and session property parameters corresponding to the QoE type identifier, and the session property parameters include parameters such as network quality of service and session priorities. Thus, after receiving a group session request message and determining the QoE type of the group session, the group session control server may inquire about the QoE mapping information in accordance with the QoE type identifier of the group and obtain the session property parameters corresponding to the QoE type identifier. Thus, during establishment of the group session, the group session control server may configure property of the session to be established in accordance with corresponding session property parameters such as network quality of service and session priorities.

Fig.3 is a flow chart of a process in which a group QoE type is configured through an XDM client according to an embodiment of the invention.

3-1. A group administrator sends, through the XDM client, to a shared group server a request message XCAP PUT requesting to set group QoE configuration information, and the XCAP PUT message carries configuration information including a group identifier, a QoE type identifier corresponding to the group identifier, and etc.

3-2. The shared group server, upon receipt of the XCAP PUT message, extracts an identifier of a message requester from the XCAP PUT message and performs authorization check on the QoE configuration, that is, to check whether the requester is authorized to configure a group QoE type.

3-3. After the check is passed, the configuration information is stored and a success response message (200 OK) is returned to the XDM client.

In addition to the group identifier and the QoE type identifier corresponding to the group identifier, the configuration information carried in the above CAP PUT request message requesting to set group QoE configuration information may also carry a member QoE mandatory flag that indicates whether it is required to validate a QoE type of a user, that is, indicating whether there is a minimum requirement for a QoE of a group member, or in other words, whether it is required that the level of QoE type identifier of a group member is not lower than that of the group QoE type identifier. With the member QoE mandatory flag, when a user is added into a group stored in the shared group server through the XML document management client, the shared group server may validate the QoE type of the user to be added into the group in accordance with the member QoE mandatory flag; or when the user initiates a group session, the group session control server may validate the QoE types of respective members in the group in accordance with the member QoE mandatory flag. Certainly, the member QoE mandatory flag may not be included, and the shared group server or the group session control server acquiesces in the validation of the QoE types of respective members in the group.

In this regard, detailed descriptions will be presented respectively below.

Firstly, with reference to Fig.4, it shows a flow chart of a method in which a user is added into a group through the XDM client according to an embodiment of the present invention.

4-1. The XDM client sends to the shared group server a request message for adding a member into a group.

4-2. The shared group server, upon receipt of the request message for adding a member into a group, exacts a user identifier and a group identifier in the message and obtains QoE type identifiers of the user and the group in accordance with the user identifier and the group identifier.

When the user to be added into the group is in the same domain as the shared group server, the shared group server can obtain the QoE type identifier of the user directly and locally, i.e., a QoE type identifier to which the user subscribes.

When the user to be added into the group is not in the same domain as the shared group server, the shared group server can obtain the QoE type identifier of the user through accessing the user QoE configuration information in a domain where the user is located, or can directly set the minimum level identifier as the QoE type identifier of the user.

For example, if the shared group server belongs to a domain A and the user to be added belongs to a domain B, the shared group server may obtain QoE type configuration information of the user in the following two methods:

First method: If the two domains A and B may share QoE type identifier configuration information of their users, the shared group server may obtain the QoE type identifier of the user to be added through accessing QoE type identifier configuration information of the user in the domain B; or if not, the QoE type identifier of the user is acquiesced to be Basic, and thus the shared group server in the domain A may consider the QoE type identifier of the user that belongs to the domain B as Basic.

Second method: The QoE type identifier of the user is stored in an XDM server dedicated for storage of user personal information, and thus when the shared group XDM server needs to obtain the QoE type identifier of the user who does not belong to the present domain, the shared group XDM server may access the XDM server in the domain where the user is located so as to obtain the QoE type identifier of the user, in which the XDM server stores user personal information.

4-3. While a member QoE mandatory flag is present in the QoE configuration information of the group, the shared group server validates the above QoE configuration type identifier, i.e., compares and determines whether a level of the QoE type of the user is not lower than that of the QoE type of the group.

While the level of the QoE type of the user is higher than or equal to that of the QoE type of the group, the user is added into the group; and

While the level of the QoE type of the user is lower than that of the QoE type of the group, the user is rejected to be added into the group.

The process of validating the QoE types of the group members may also be performed when the group session is initiated, in which the group session control server validates the QoEs of the respective members in the group, a specific procedure of which will be detailed below.

4-4. The shared group XDM server generates a response message in accordance with a validation result.

While the validation is not passed, a failure response message is generated with failure reason included in the message body, and the message includes the QoE configuration type identifier of the group.

If the validation is passed, a success response message is generated.

4-5. The corresponding response message is sent to the XDM client in accordance with the validation result.

If the member QoE mandatory flag is present in the QoE configuration information of the group, the group session control server also validates the QoE types of the group members when the group session is initiated, in the following procedure:

1. After obtaining group information, the group session control server firstly obtains the QoE type identifier of each member in the group (i.e., the QoE type identifier to which the group member user subscribes).

2. The group session control server checks whether the QoE type identifier of each member satisfies QoE type requirement of the group (that is, the level of the QoE type of the member is not lower than that of the QoE type of the group), the group members who do not satisfy the requirement are deleted from the group, and a notification message is sent to the deleted group members.

3. Finally, a group session invitation is sent to each group member satisfying the QoE type requirement.

As mentioned previously, in order to implement differentiated services for different groups, when a group session is established, the group session control server needs to obtain the QoE type identifier information of the group, and inquire about the QoE mapping information in accordance with the QoE type identifier, to obtain the session property parameters corresponding to the QoE type identifier and configure properties of the session to be established using these parameters.

The group session control server may read directly the shared group server, obtain the stored QoE type of the group and use it as the QoE type of the group for which the session is established, or may determine the QoE type of the group session through a QoE negotiation procedure.

The QoE negotiation procedure, through which the QoE type identifier information of the group session is determined, is as follows:

1. The user initiates, through a client, a request message for a group session to the group session control server. The request message carries initial QoE type information and/or session QoE type mandatory information.

2. The group session control server sends an invitation message respectively to respective members in the group.

3. The group session control server determines a QoE type of the group session in accordance with QoE type levels in the received response messages from the respective members.

If the request message for the group session carries the session QoE type mandatory information, the group session control server may, after determining the QoE type of the group session, check whether the level of the determined QoE type of the group session is lower than that of the initial QoE type in the session request message, and if yes, the establishment of the present session is determined to be failed; or if not, a normal session flow is established.

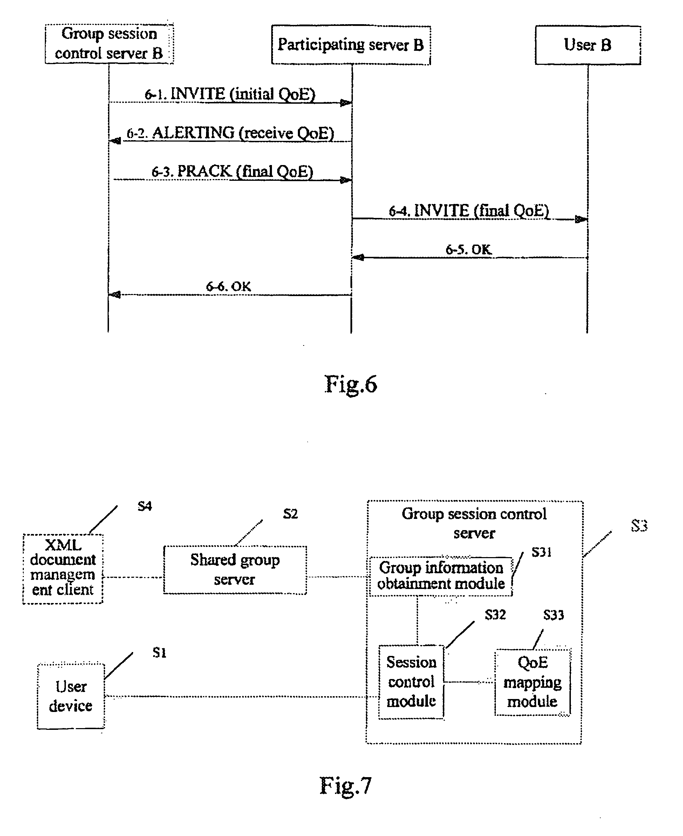

The QoE negotiation procedure will be further described in detail below with reference to Fig.5 and Fig.6.

With reference to Fig.5, it illustrates a flow of a user initiating a group session request according to an embodiment of the present invention.

5-1. A user A initiates a request message INVITE for a group session to a group session control server A, and the message may include an initial QoE type code designated by the user A, and a session QoE type mandatory flag indicating whether a QoE type code allocated to the group session should satisfy the initial QoE type code in the message, so that a session receiver can decide whether to accept the invitation in accordance with the flag. The value of this field of the QoE type mandatory flag may indicate whether the condition to be satisfied is Mandatory or Optional.

5-2. The group session control server A, upon receipt of the request message from the user A, may determine the initial QoE type code as an invitation QoE type code if the request message carries the initial QoE type code, or may send to the shared group server an XCAP GET requesting QoE type information of the group if the request message carries no initial QoE type code.

5-3. The shared group server returns the QoE type information of the group to the group session control server A in a 200 OK message.

5-4. The group session control server A extracts the QoE type identifier of the group and determines it as the invitation QoE type code.

5-5. The group session control server A invites respective members in the group sequentially using an invitation message including the determined invitation QoE type code, and returns an ALERT message to the user A after receiving a first ALERTING request message.

5-6. The group session control server A, after receiving responses from all of the session receivers, allocates a QOE type code, for example, the lowest one of the QoE type levels included in all responses, to the group, in accordance with the responses from the respective receivers. If the level of the initial QoE type code designated by the user A is lower than the lowest one of the QoE type levels included in all the responses, the initial QoE type code may also be selected as the QoE type code of the group session. If the determined group QoE type level does not satisfy the initial QoE type level designated by the user A, an error message may be returned to the user A.

In the above procedure, for a specific type of the invitation QoE type code (e.g., the type of Crisis), the QoE type Crisis may be directly allocated to the group session, regardless of the responses from the respective session receivers.

The QoE type code may not be included in the invitation message sent by the group session control server A to the respective members in the group, but be allocated to the group, i.e., the QoE type code of the present session may be determined, in accordance with responses from the respective receivers, upon receipt of the responses from the session receivers.

5-7. The group session control server A, after receiving the first invitation acceptance response message, returns to the user A a final response message (OK) including the QoE type code allocated to the session by the group session control server A.

5-8. The group session control server A configures session property, e.g., a priority of the session, QoS parameters of the session, etc., in accordance with the QOE mapping information.

With reference to Fig.6, it illustrates a flow of a receiver accepting a group session invitation according to an embodiment of the invention.

6-1. A group session control server B at a receiving side receiver sends to a participating server B at the receiving side a group session invitation message including invitation QoE type information.

6-2. The participating server B determines a response QoE type code, puts the response QoE type code into an ALERTING message and returns the message to the group session control server B, where the response QoE type code is determined in accordance with QoE subscription information of a user B at the receiving side.

The participating server B may also determine whether to accept the present session invitation in accordance with QoE type configuration information of the user B and the invitation QoE type information, and if the present session invitation is accepted, the server returns the QoE type identifier of the user B in an ALERTING request message to the group session control server of the session initiator; or if the present session invitation is not accepted, the server may send an invitation rejection message to the group session control server of the session initiator.

6-3. After determining responses from all users at the receiving side, the group session control server at the transmitting side determines a final QoE type code to be allocated to the group session and sends it in a PRACK message to respective participating servers including the participating server B.

6-4. The participating server B sends to the user B a group session INVITE message including the final QoE type code.

6-5. The user B sends a session acceptance response message OK.

6-6. The participating server B forwards the response message to the group session control server B.

It can be seen that, with the invention, the QoE type of the group session can be determined not only through the shared group server but also through the QoE negotiation procedure, thereby further improving the flexibility of applications of the invention. The invention can be applied to numerous different group session procedures.

With reference to Fig.7, it illustrates a principle diagram of a system according to a preferred embodiment of the invention.

The embodiment of the system includes: a user device S1, a shared group server S2, and a group session control server S3 connected respectively with the user device S1 and the shared group server S2. Particularly, the user device S1 is adapted to initiate a group session; the shared group server S2 is adapted to store group information including lists of group members and group QoE type identifiers; and the group session control server S3 is adapted to control the group session requested by the user device S1 in accordance with the group information stored in the shared group server S2, and to configure properties of the established group session in accordance with the QoE type of the group.

The QoE type identifiers corresponding to respective groups can be configured directly in the shared group server S2 and a user is added into a group stored in the shared group server. Alternatively, the QoE type identifiers corresponding to respective groups can be configured in the shared group server by a group administrator through an XML document management client S4 and a user is added into a group stored in the shared group server. When the XML document management client S4 adds a user into a group stored in the shared group server S2, the shared group server may also validate a QoE type of the user to be added into the group. The specific procedure thereof could be obtained with reference to the previous description of the method of the present invention.

The user device S1 may initiate a group session request through a group session client and stores the QoE type identifier of the user in the group session client, so as to select the QoE type when the session is initiated.

In order to implement differentiated services for different groups, the group session control server S3 according to the embodiment of the invention includes a group information obtainment module S31 and a session control module S32, and also includes a QoE mapping module S33 for storage of QoE mapping information. The QoE mapping information includes QoE type identifiers and session property parameters corresponding to the QoE type identifiers.

When the user device S1 requests the group session control server S3 for a group session, the group information obtainment module S31 obtains the QoE type identifiers of the user and the group from the shared group server S2 in accordance with the group session request message received from the user device and sends the obtained QoE type identifiers to the session control module S32. The session control module S32 obtains corresponding QoE mapping information from the QoE mapping module in accordance with the QoE type identifier of the group, and configures properties of the group session to be established in accordance with the corresponding QoE mapping information.

A specific procedure in which a user initiates a group session and a receiver receives a group session invitation is the same with that of the present invention as described above, and descriptions thereof will be omitted here.

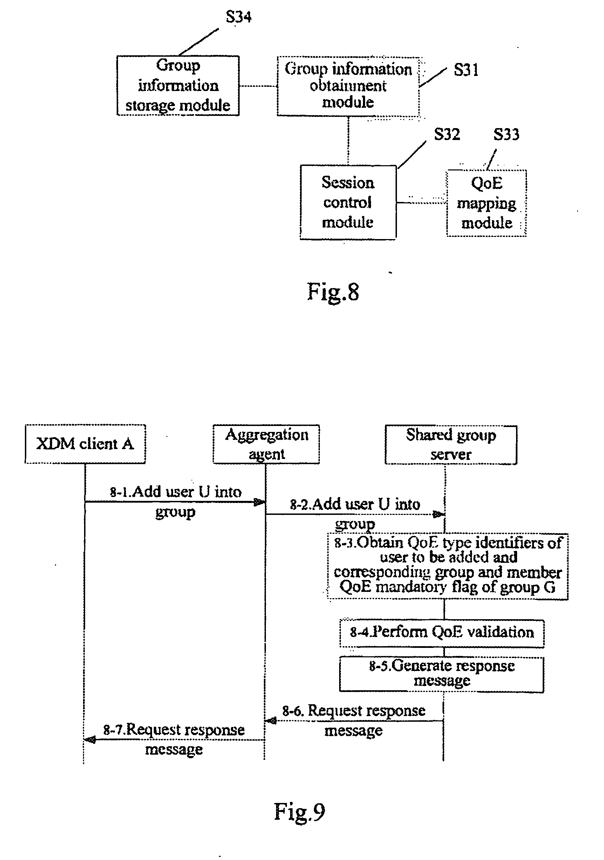

Fig.8 illustrates a principle diagram of the group session control server according to another embodiment of the invention.

In this embodiment, the group session control server includes: a group information obtainment module S31, a session control module S32, a QoE mapping module S33 and a group information storage module S34. Particularly, the group information obtainment module S31 is adapted to obtain QoE types of a group and users in accordance with a group session request message received from a user device; the QoE mapping module S32 is adapted to store QoE mapping information including QoE types and session characteristics parameters corresponding to the QoE types; the session control module S33 is adapted to obtain the QoE mapping information from the QoE mapping module in accordance with the group QoE type, and to configure properties of a group session to be established in accordance with the QoE mapping information; and the group information storage module S34 is adapted to store group information including lists of group members and group QoE types.

When the user device requests the group session control server for a group session, the group information obtainment module S31 obtains QoE type identifiers of users and groups from the group information storage module S34 in accordance with the group session request message received from the user device, and sends the obtained QoE type identifiers to the session control module S32. The session control module S32 obtains corresponding QoE mapping information from the QoE mapping module in accordance with the QoE type identifier of the group and configures, in accordance with the information, properties of the group session to be established.

The invention may be applied to numerous different group session procedures, and applications of the invention in different contexts will be further described below by way of examples of a PoC group session and an Instant Messaging (IM) group session.

Example 1: Taking a PoC group session as an example, it is assumed that PoC client A is an owner of a group G, the QoE type identifier of the group G is Professional and the member QoE mandatory flag is Mandatory". User A firstly adds users U and V into the group G, and calls clients of the users U and V, i.e., PoC client U and PoC client V, through the PoC client A. It is assumed that QoE configuration of the user U is Professional, QoE configuration of the user V is Official Government Use. There is additionally a group H with a QoE type identifier Basic and a member QoE mandatory flag Mandatory.

A procedure in which the user A adds the user U into the group G is as illustrated in Fig.9.

8-1. The user A sends through its XDM client A to an aggregation proxy a request for adding the user U into the group G.

8-2. The aggregation proxy forwards the request for adding the user U into the group G.

8-3. The share group server obtains a QoE type identifier of the user U in the request message and a QoE type identifier in the QoE configuration of the group G.

8-4. Because the member QoE mandatory flag of the group is Mandatory, the shared group server validates the QoEs; and because the QoE type identifier of the user U is Professional and the QoE type identifier of the group is also Professional, the verification is passed.

8-5. The shared group server generates a success response message in accordance with the validation result.

8-6. The shared group server returns a success response to the aggregation proxy.

8-7. The aggregation proxy forwards the response to the XDM client A, and the user A adds the user U into the group G successfully.

The procedure in which the user A adds the user V into the group G is similar to the above procedure.

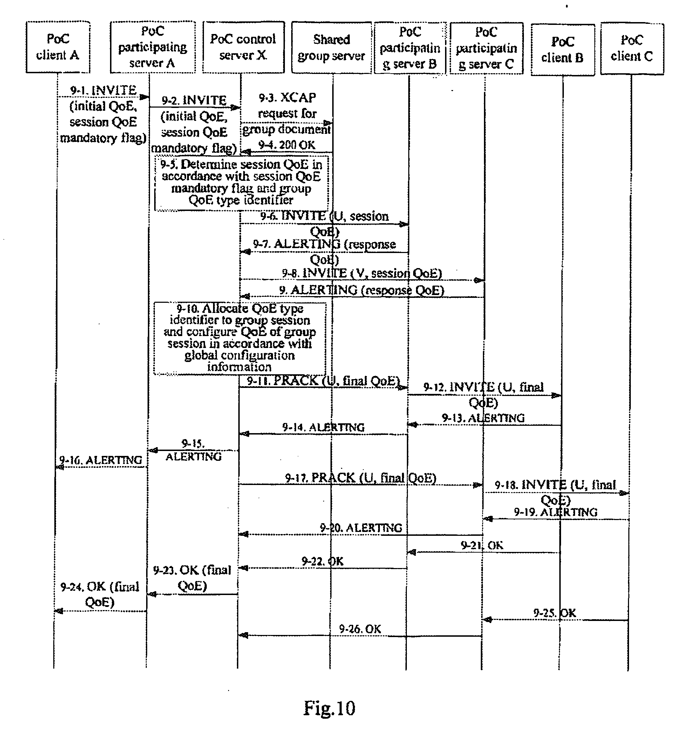

A flow in which the user A initiates a PoC group session is as illustrated in Fig.10.

9-1. The PoC client A sends a group session invitation message. The group session invitation message includes an identifier of the group, an initial QoE type identifier and a session QoE mandatory flag, in which the initial QoE type identifier is set as Professional and the session mandatory flag is set as Mandatory.

The message mainly includes the following contents:

Initiator identifier: a Session-Initiation-Protocol Uniform Resource Identifier (SIP URI) of client A;

Group identifier: a service Uniform Resource Identifier (URI) of the group G;

QoE type identifier: Professional; and

QoE mandatory flag: Mandatory.

9-2. A PoC participating server A forwards the message to a PoC control server X.

9-3. The PoC control server X extracts the identifier of the group G in the message and sends to the shared group server a request for obtaining a group document corresponding to the above group.

9-4. The shared group server returns the requested group document.

9-5. The PoC control server X extracts the OoE type identifier of the group, obtains its value Professional and determines the QoE type identifier of the session as Professional.

According to global configuration, the level of QoE type of a group session that can be initiated by the user may be restricted not to exceed the level of a QoE type designated in the definition of the group, and if the QoE type level in the group session request message is higher than that of the QoE type designated in the group definition, the value of the QoE type identifier of the session should be the QoE type identifier in the definition of the group.

9-6. The PoC control server X sends to a PoC participating server C a session invitation message, and the QoE type identifier of the session is included in the session invitation message.

9-7. The PoC participating server B returns to the PoC control server X an ALERTING message, and the QoE type identifier Professional of the user B is included in the ALERTING message.

9-8. The PoC control server X sends to the PoC participating server C a session invitation message, and the QoE type identifier of the session is in the session invitation message.

9-9. A PoC participating server C returns to the PoC control server X an ALERTING message, and a QoE type identifier "Official Government Use" of the user C is included in the ALERTING message.

9-10. The PoC control server X determines a final QoE type identifier allocated to the group session as Professional, in accordance with the QoE type identifiers in the response messages in the previous four steps, and performs QoE configuration of the group session in accordance with the QoE type identifier. Practically, the PoC control server X may also perform QoE configuration of the group session after receiving invitation acceptance response messages from all members. -

Because the session QoE mandatory flag in the group session request message is Mandatory, that is, it is required that the group session satisfies the designated QoE type identifier, if a QoE type level that is lower than the designated QoE type level is returned in either of the steps 9-7 and 9-9, the session fails.

The above steps 9-6 to 9-10 are a procedure of negotiating about the QoE type of the session. In the procedure, the PoC control server X receives QoE type parameters in the group session invitation message and sends the session invitation to respective session members. The participating server of each session member, after receiving the invitation, issues a QoE type response to the PoC control server X in accordance the QoE configuration information of the member, and the PoC control server X designates the QoE type of the entire session in accordance with the QoE type responses of the respective members and thereafter configures the session in accordance with the QoE type of the session.

9-11. The PoC control server X sends to the PoC participating server B a PRACK message, and the final QoE type identifier is included in the PRACK message.

9-12. The PoC participating server B sends to the PoC client B a group session invitation message, and the final QoE type identifier is included in the group session invitation message.

9-13. The PoC client B returns an ALERTING message to the PoC participating server B.

9-14. The PoC participating server B sends the ALERTING message to the PoC control server X.

9-15. The PoC control server X sends the ALERTING message to the PoC participating server A.

9-16. The PoC participating server A sends the ALERTING message to the PoC client A initiating the session.

9-17. The PoC control server X sends to the PoC participating server C a PRACK message including a final QoE type identifier.

9-18. The PoC participating server C sends to the PoC client C a group session invitation message INVITE including the final QoE type identifier.

9-19. The PoC client C returns an ALERTING message to the PoC participating server C.

9-20. The PoC participating server C returns the ALERTING message to the PoC control server.

9-21. The PoC client B sends a final response message to the PoC participating server B.

9-22. The PoC participating server B sends the final response message to the PoC control server X.

9-23. The PoC control server X sends the final response message to the PoC participating server A.

9-24. The PoC participating server A returns the final response message to the PoC client.

9-25. The PoC client C returns the final response message to the PoC participating server C.

9-26. The PoC participating server C returns the final response message to the PoC control server X.

A procedure of establishing a group session of group H is similar to that of establishing a group session of group G and is particularly as follows.

The initiator initiates a session request including an initial group session QoE type identifier Basic and a member QoE mandatory flag Mandatory; the group server sends to respective members a session invitation message carrying the QoE type identifier Basic; the participating server corresponding to each member returns an ALERTING response message carrying the QoE type identifier "Basic"; the group server sends to the respective participating servers a PRACK message carrying a final QoE type identifier Basic; the respective participating servers send to the respective members a session invitation message carrying the QoE type identifier Basic; and finally, a group session is established, with a corresponding QoE type identifier Basic.

A procedure in which the group session server configures properties of a group session in accordance with different QoE types will be further described in detail below.

Some IP network performance parameters are defined as follows:

IPTD: IP Packet Transmission Delay. It defines a time period for an IP packet to pass a basic segment or a set of network segments, regardless whether the packet is transmitted successfully.

IPDV: IP Packet Delay Variation. An end-to-end IP packet delay variation between two points (vk) indicates a difference between an actual delay from the time at which an IP packet k (xk) passes a source node SRC (MP1) to the time at which the IP packet k (xk) passes a destination node DST (MP2) and a transmission delay (d1, 2) for a reference IP packet to transmit through the same path, that is, vk=xk-d1, 2.

IPER: IP Packet Error Ratio. It refers to a ratio of the number of error IP packets to a sum of the number of successful IP packets and the number of error IP packets.

IPLR: IP packet loss ratio. An IP packet throughout in bytes at an egress node is equal to the number of all bytes in successful IP packets that are observed at this node during a specific interval of time divided by this interval of time.

Session service QoS levels and corresponding network performance parameter indexes are defined in Table 1 below:

**Table 1:**

| QoS Class | IPTD | IPDV | IPLR | IPER |
|---|---|---|---|---|
| Class 0 | 100 ms | 50 ms | 5 x 10-4 | 5 x 10-5 |
| Class 1 | 180 ms | 55 ms | 5 x 10-4 | 5 x 10-5 |
| Class 2 | 240 ms | 60 ms | 5 x 10-4 | 5 x 10-5 |
| Class 3 | 300 ms | 70 ms | 5 x 10-4 | 5 x 10-5 |

A QoE type identifier may be mapped to a session priority parameter and the above QoS level, as shown in Table 2 below:

**Table 2:**

| QoE Type Identifier | QoS Level | Session Priority |
|---|---|---|
| Basic | Class 3 | 0.1 |
| Professional | Class 2 | 0.2 |
| Crisis | Class 1 | 0.3 |
| Official Government Use | Class 0 | 0.4 |

In accordance with the above information, the QoE type identifier "Basic" is mapped to the QoS level "Class 3" and the session priority "0.1"; and the QoE type identifier "Professional" is mapped to the QoS level "Class 2" and the session priority "0.2".

In accordance with the above mapping results, respective parameters of a QoS of the group G are set as respective parameter values in Table 3 below:

**Table 3:**

| QoS Class | IPTD | IPDV | IPLR | IPER | IPDR |
|---|---|---|---|---|---|
| Class 0 | 100 ms | 50 ms | 5 x 10-4 | 5 x 10-5 | 5 x 10-4 |

Respective parameters of QoS of the group H are set as respective parameter values in Table 4 below:

**Table 4:**

| QoS Class | IPTD | IPDV | IPLR | IPER | IPDR |
|---|---|---|---|---|---|
| Class 1 | 180 ms | 55 ms | 5 x 10-4 | 5 x 10-5 | 5 x 10-4 |

For management of the session priority, when participants are to be added respectively into the groups G and H, the requirement of the group G is satisfied preferentially and more network bandwidth is allocated to the group G in accordance with the magnitude of priority.

Priority processing can be carried out in a multi-queuing method.

The group session control server can put request messages in respective active group sessions, which are not processed temporarily, into a plurality of queues. For example, queue A is one with session type Basic, and queues B, C and D are ones respectively with session types Professional, Crisis and Official Government Use. A ratio of processing speeds of the four queues is 1:2:3:4, and a queue with a higher priority is picked up first, so that a request with a higher priority can be processed firstly, and considerations also are given to a session request with a lower priority.

Example 2: taking an IM group session as an example, the QoE negotiation principle in an IM group session procedure is consistent with that in the PoC group session procedure and their flows are substantially the same. In this example, an IM client A initiates a group session of the group G, with a configured QoE type code Professional.

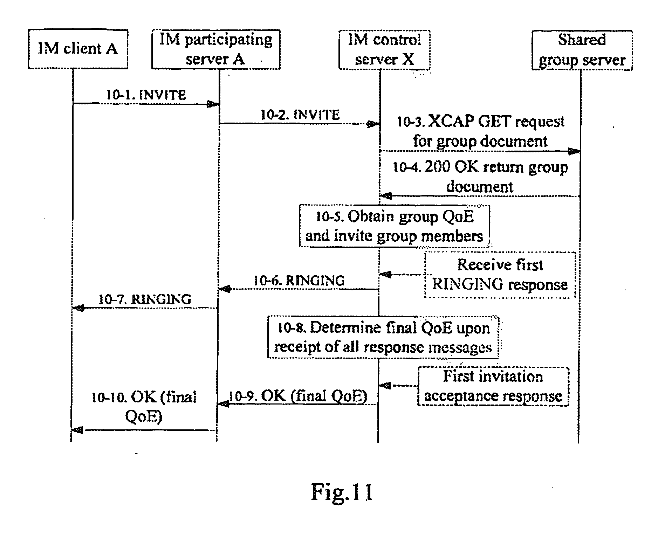

A message flow is as illustrated in Fig.11.

10-1. The IM client A sends a group session request to an IM participating server A.

10-2. The IM participating server A sends a request to an IM control server X.

10-3. The IM control server X obtains group information from the request message and sends to the shared group server an XCAP GET message requesting a group document.

10-4. The shared group server returns the group information to the IM control server X.

10-5. The IM control server X obtains the QoE type identifier Professional of the group from the group information and sends to respective group member a session invitation message including the obtained QoE type identifier information.

10-6. The IM control server X, after receiving the temporary response messages returned from the group members (the messages including response QoE type identifiers), sends the temporary response messages to the IM participating server A.

10-7. The IM participating server A sends a temporal response message to the IM client A.

10-8.The IM control server X determines a final group QoE type in accordance with the respective response messages and configures the OoE of the group session in accordance with the group QoE type.

10-9. The IM control server X, after receiving the first final response message, sends a final response message with a final QoE to the IM participating server A.

10-10. The IM participating server sends to the IM client A the final response message including a finally selected group session QoE type identifier Professional.

Although the invention has been described with reference to the embodiments, those ordinarily skilled in the art shall appreciate that numerous modifications and variations of the invention are possible and it is intended that these modifications and variations shall fall within the scope of the invention as defined by the accompanying claims.

## Claims

1. A methods for implementing Quality of Experience (QoE) of a group session, comprising the steps of:
receiving (5-1), by a group session control server, a request message for a group session initiated by a inviting user, wherein the request message includes an initial QoE type code;
determining (5-6), by the group session control server, a final QoE type of the group session in accordance with preset QoE type information corresponding to the group and the initial QoE type code, when the group session is established;
configuring (5-8), by the group session control server, properties of the established session in accordance with the final QoE type of the group session; and
sending (6-4), by the group session control server, a group session invitation message including the final QoE type of the group session to invited users.

2. The method according to claim 1, comprising:
setting (3-1) QoE types corresponding to respective groups in a shared group server through an XML document management client.

3. The method according to claim 2, wherein the step of setting QoE types corresponding to respective groups in a shared group server through an XML document management client comprises:
sending (3-1), by the XML document management client, to the shared group server a group QoE configuration request message carrying configuration information; and
storing (3-3), by the shared group server, the configuration information.

4. The method according to claim 3, wherein the step of setting the QoE types corresponding to the respective groups in the shared group server through the XML document management client comprises:
Performing (3-2), by the shared group server, after receiving the group QoE configuration request message, an authorization check of QoE configuration in accordance with a requester ID in the request message.

5. The method according to claim 3, wherein the configuration information comprises: a group identifier and a QoE type corresponding to the group identifier.

6. The method according to claim 5, wherein:
the configuration information further comprises: a member QoE mandatory flag, indicating whether to validate a QoE type of a user; and
the method further comprises: validating (4-3), by the shared group server, a QoE type of a user to be added into a group stored in the shared group server when the user is added into the group through the XML document management client.

7. The method according to claim 6, wherein the step of validating by the shared group server the QoE type of the user to be added into the group comprises:
comparing a level of the QoE type of the user with that of the QoE type of the group; and
adding the user into the group if the level of the QoE type of the user is above or equal to that of the QoE type of the group; or
rejecting addition of the user into the group if the level of the QoE type of the user is lower than that of the QoE type of the group.

8. The method according to claim 7, wherein:
when the user to be added into the group is in the same domain as the shared group server, obtaining, by the shared group server, the QoE type of the user locally;
when the user to be added into the group is not in the same domain as the shared group server, the shared group server accessing user QoE configuration information in a domain where the user is located to obtain the QoE type of the user or setting the QoE type of the user directly to be a minimum level.

9. The method according to claim 1, wherein the group session control server determining the final QoE type of the group session in accordance with preset QoE type information corresponding to the group and the initial QoE type code comprises:
sending (9-6, 9-8), by the group session control server, an invitation message including an invitation QoE type code sequentially to respective invited members in the group, wherein the invitation QoE type code is the initial QoE type code; and
determining (9-10), by the group session control server, the final QoE type of the group session in accordance with QoE type levels in response messages received from the respective invited members.

10. The method according to claim 1, wherein the group session control server determining the final QoE type of the group session in accordance with preset QoE type information corresponding to the group and the initial QoE type code comprises:
after receiving the request message of the group session, the group session control server determining an invitation QoE type, and putting (9-5) the determined invitation QoE type information and the session QoE type mandatory information into an invitation message;
after receiving the invitation from the group session control server, the respective invited members in the group determining whether to accept the session invitation in accordance with their own QoE type configuration information and the invitation QoE type information; and
when the session invitation is accepted, returning (9-7, 9-9)their own QoE type information to the group session control server in response messages.

11. The method according to claim 1, further comprising:
configuring QoE mapping information in the group session control server in advance, wherein the QoE mapping information comprises a QoE type and session property parameters corresponding to the QoE type;
inquiring about the QoE mapping information in accordance with the QoE type of the group session, and obtaining the session property parameters, wherein the session property parameters comprises network quality of service and session priorities; and
configuring (9-10) properties of the established session in accordance with the session characteristics parameters.

12. The method according to claim 11, wherein the step of configuring the properties of the established session in accordance with the session property parameters comprises:
determining a level of quality of service of the established session in accordance with hetwork quality of service parameters; and
processing preferentially a session request with a higher priority in accordance with session priority parameters.

13. A system for implementing Quality of Experience of a group session, comprising:
a user device (S1), adapted to initiate a request message for a group session, wherein the request message includes an initial QoE type code;
a shared group server (S2), adapted to store group information, the group information comprising lists of group members and QoE type information corresponding to the group; and
a group session control server (S3), adapted to determine a final QoE type of the group session in accordance with the QoE type information corresponding to the group stored in the shared group server and the initial QoE type code, when the group session is established; to configure properties of the established group session in accordance with the final QoE type corresponding to the group; and to send a group session invitation message including the final QoE type of the group session to invited users.

## Patentansprüche

1. Verfahren zum Implementieren einer Qualität der Erfahrung (Quality of Experience - QoE) einer Gruppensitzung, das die folgenden Schritte umfasst:
Empfangen (5-1), durch einen Gruppensitzungs-Steuer-Server, einer Anforderungsnachricht für eine Gruppensitzung, die durch einen einladenden Benutzer eingeleitet wird, wobei die Anforderungsnachricht einen anfänglichen QoE-Typ-Code enthält;
Bestimmen (5-6), durch den Gruppensitzungs-Steuer-Server, eines endgültigen QoE-Typs der Gruppensitzung in Übereinstimmung mit vorgegebenen QoE-Typ-Informationen, die der Gruppe und dem anfänglichen QoE-Typ-Code entsprechen, wenn die Gruppensitzung hergestellt wird;
Konfigurieren (5-8), durch den Gruppensitzungs-Steuer-Server, der Eigenschaften der hergestellten Sitzung in Übereinstimmung mit dem endgültigen QoE-Typ der Gruppensitzung; und
Senden (6-4), durch den Gruppensitzungs-Steuer-Server, einer Gruppensitzungs-Einladungsnachricht, die den endgültigen QoE-Typ der Gruppensitzung enthält, an eingeladene Benutzer.

2. Verfahren nach Anspruch 1, das Folgendes umfasst:
Setzen (3-1) der QoE-Typen, die den jeweiligen Gruppen entsprechen, in einem gemeinsam benutzten Gruppen-Server durch einen XML-Dokumenten-Management-Client.

3. Verfahren nach Anspruch 2, wobei der Schritt des Setzens der QoE-Typen, die den jeweiligen Gruppen entsprechen, in einem gemeinsam benutzten Gruppen-Server durch einen XML-Dokumenten-Management-Client Folgendes umfasst:
Senden (3-1), durch den XML-Dokumenten-Management-Client, einer Gruppen-QoE-Konfigurations-Anforderungsnachricht, die Konfigurationsinformationen trägt, an den gemeinsam benutzten Gruppen-Server; und
Speichern (3-3), durch den gemeinsam benutzten Gruppen-Server, der Konfigurationsinformationen.

4. Verfahren nach Anspruch 3, wobei der Schritt des Setzens der QoE-Typen, die den jeweiligen Gruppen entsprechen, in dem gemeinsam benutzten Gruppen-Server durch den XML-Dokumenten-Management-Client Folgendes umfasst:
Ausführen (3-2), durch den gemeinsam benutzten Gruppen-Server, nach dem Empfangen der Gruppen-QoE-Konfigurations-Anforderungsnachricht einer Berechtigungsüberprüfung der QoE-Konfiguration in Übereinstimmung mit einer Anforderer-ID in der Anforderungsnachricht.

5. Verfahren nach Anspruch 3, wobei die Konfigurationsinformationen Folgendes umfassen: einen Gruppenidentifizierer und einen QoE-Typ, der dem Gruppenidentifizierer entspricht.

6. Verfahren nach Anspruch 5, wobei:
die Konfigurationsinformationen ferner Folgendes umfassen: einen obligatorischen Mitglied-QoE-Merker, der angibt, ob ein QoE-Typ eines Benutzers zu validieren ist; und
das Verfahren ferner Folgendes umfasst: Validieren (4-3), durch den gemeinsam benutzten Gruppen-Server, eines QoE-Typs eines Benutzers, der zu einer Gruppe hinzuzufügen ist, die in dem gemeinsam benutzten Gruppen-Server gespeichert ist, wenn der Benutzer durch den XML-Dokumenten-Management-Client zu der Gruppe hinzugefügt wird.

7. Verfahren nach Anspruch 6, wobei der Schritt des Validierens durch den gemeinsam benutzten Gruppen-Server des QoE-Typs des Benutzers, der zu der Gruppe hinzuzufügen ist, Folgendes umfasst:
Vergleichen eines Niveaus des QoE-Typs des Benutzers mit dem des QoE-Typs der Gruppe; und
Hinzufügen des Benutzers zu der Gruppe, falls das Niveau des QoE-Typs des Benutzers größer als der oder gleich dem des QoE-Typs der Gruppe ist; oder
Ablehnen des Hinzufügens des Benutzers zu der Gruppe, falls das Niveau des QoE-Typs des Benutzers kleiner als das des QoE-Typs der Gruppe ist.

8. Verfahren nach Anspruch 7, wobei:
wenn sich der zu der Gruppe hinzuzufügende Benutzer in derselben Domain wie der gemeinsam benutzte Gruppen-Server befindet, lokales Erhalten, durch den gemeinsam benutzten Gruppen-Server, des QoE-Typs des Benutzers;
wenn sich der zu der Gruppe hinzuzufügende Benutzer nicht in derselben Domain wie der gemeinsam benutzte Gruppen-Server befindet, Zugreifen, durch den gemeinsam benutzten Gruppen-Server, auf die Benutzer-QoE-Konfigurationsinformationen in einer Domain, in der sich der Benutzer befindet, um den QoE-Typ des Benutzers zu erhalten, oder direktes Setzen des QoE-Typs des Benutzers auf ein minimales Niveau.

9. Verfahren nach Anspruch 1, wobei der Gruppensitzungs-Steuer-Server, der den endgültigen QoE-Typ der Gruppensitzung in Übereinstimmung mit vorgegebenen QoE-Typ-Informationen, die der Gruppe und dem anfänglichen QoE-Typ-Code entsprechen, bestimmt, Folgendes umfasst:
Senden (9-6, 9-8), durch den Gruppensitzungs-Steuer-Server, einer Einladungsnachricht, die einen Einladungs-QoE-Typ-Code enthält, sequenziell an jeweilige eingeladene Mitglieder in der Gruppe, wobei der Einladungs-QoE-Typ-Code der anfängliche QoE-Typ-Code ist; und
Bestimmen (9-10), durch den Gruppensitzungs-Steuer-Server, des endgültigen QoE-Typs der Gruppensitzung in Übereinstimmung mit den QoE-Typ-Niveaus in von den jeweiligen eingeladenen Mitgliedern empfangenen Antwortnachrichten.

10. Verfahren nach Anspruch 1, wobei der Gruppensitzungs-Steuer-Server, der den endgültigen QoE-Typ der Gruppensitzung in Übereinstimmung mit den vorgegebenen QoE-Typ-Informationen, die der Gruppe und dem anfänglichen QoE-Typ-Code entsprechen, bestimmt, Folgendes umfasst:
nach dem Empfangen der Anforderungsnachricht der Gruppensitzung, durch den Gruppensitzungs-Steuer-Server, Bestimmen eines Einladungs-QoE-Typs und Setzen (9-5) der bestimmten Einladungs-QoE-Typ-Informationen und der obligatorischen Sitzungs-QoE-Typ-Informationen in eine Einladungsnachricht;
nach dem Empfangen der Einladung von dem Gruppensitzungs-Steuer-Server, Bestimmen, durch die jeweiligen eingeladenen Mitglieder in der Gruppe, ob die Sitzungseinladung in Übereinstimmung mit ihren eigenen QoE-Typ-Konfigurationsinformationen und den Einladungs-QoE-Typ-Informationen anzunehmen ist; und
wenn die Sitzungseinladung angenommen wird, Zurückschicken (9-7, 9-9) ihrer eigenen QoE-Typ-Informationen an den Gruppensitzungs-Steuer-Server in Antwortnachrichten.

11. Verfahren nach Anspruch 1, das ferner Folgendes umfasst:
Konfigurieren der QoE-Abbildungsinformationen in dem Gruppensitzungs-Steuer-Server im Voraus, wobei die QoE-Abbildungsinformationen einen QoE-Typ und Sitzungseigenschaftsparameter, die dem QoE-Typ entsprechen, umfassen;
Abfragen der QoE-Abbildungsinformationen in Übereinstimmung mit dem QoE-Typ der Gruppensitzung und Erhalten der Sitzungseigenschaftsparameter, wobei die Sitzungseigenschaftsparameter Netzdienstqualität und Sitzungseigenschaften umfassen; und
Konfigurieren (9-10) der Eigenschaften der hergestellten Sitzung in Übereinstimmung mit den Sitzungseigenschaftsparametern.

12. Verfahren nach Anspruch 11, wobei der Schritt des Konfigurierens der Eigenschaften der hergestellten Sitzung in Übereinstimmung mit den Sitzungseigenschaftsparametern Folgendes umfasst:
Bestimmen eines Niveaus der Dienstqualität der hergestellten Sitzung in Übereinstimmung mit den Netzdienstqualitätsparametern; und
vorzugsweise Verarbeiten einer Sitzungsanforderung mit einer höheren Priorität in Übereinstimmung mit Sitzungsprioritätsparametern.

13. System zum Implementieren einer Qualität der Erfahrung einer Gruppensitzung, das Folgendes umfasst:
eine Benutzervorrichtung (S 1), die beschaffen ist, um eine Anforderungsnachricht für eine Gruppensitzung einzuleiten, wobei die Anforderungsnachricht einen anfänglichen QoE-Typ-Code enthält;
einen gemeinsam benutzten Gruppen-Server (S2), der beschaffen ist, um Gruppeninformationen zu speichern, wobei die Gruppeninformationen Listen der Gruppenmitglieder und QoE-Typ-Informationen, die der Gruppe entsprechen, umfassen; und
einen Gruppensitzungs-Steuer-Server (S3), der beschaffen ist, um einen endgültigen QoE-Typ der Gruppensitzung in Übereinstimmung mit den QoE-Typ-Informationen, die der Gruppe, die in dem gemeinsam benutzten Gruppen-Server gespeichert ist, und dem anfänglichen QoE-Typ-Code entsprechen, zu bestimmen, wenn die Gruppensitzung hergestellt wird; die Eigenschaften der hergestellten Gruppensitzung in Übereinstimmung mit dem endgültigen QoE-Typ, der der Gruppe entspricht, zu konfigurieren; und eine Gruppensitzungs-Einladungsnachricht, die den endgültigen QoE-Typ der Gruppensitzung enthält, an eingeladene Benutzer zu senden.

## Revendications

1. Procédé permettant de mettre en oeuvre une qualité d'expérience (QoE) d'une session de groupe, comprenant les étapes suivantes :
recevoir (5-1), par un serveur de contrôle de session de groupe, un message de requête pour une session de groupe initiée par un utilisateur lançant une invitation, le message de requête incluant un code de type de QoE initial ;
déterminer (5-6), par le serveur de contrôle de session de groupe, un type de QoE final de la session de groupe selon des informations de type de QoE prédéfinies correspondant au groupe et au code de type de QoE initial, lorsque la session de groupe est établie ;
configurer (5-8), par le serveur de contrôle de session de groupe, les propriétés de la session établie selon le type de QoE final de la session de groupe ; et
envoyer (6-4), par le serveur de contrôle de session de groupe, un message d'invitation de session de groupe incluant le type de QoE final de la session de groupe aux utilisateurs invités.

2. Procédé selon la revendication 1, comprenant :
déterminer (3-1) des types de QoE correspondant à des groupes respectifs dans un serveur de groupes de partage par l'intermédiaire d'un client de gestion de documents XML.

3. Procédé selon la revendication 2, dans lequel l'étape de détermination des types de QoE correspondant à des groupes respectifs dans un serveur de groupes de partage par l'intermédiaire d'un client de gestion de documents XML comprend :
envoyer (3-1), par le client de gestion de documents XML, au serveur de groupes de partage un message de requête de configuration de QoE de groupe contenant des informations de configuration ; et
stocker (3-3), par le serveur de groupes de partage, les informations de configuration.

4. Procédé selon la revendication 3, dans lequel l'étape de détermination des types de QoE correspondant aux groupes respectifs dans le serveur de groupes de partage par l'intermédiaire du client de gestion de documents XML comprend :
exécuter (3-2), par le serveur de groupes de partage, après la réception du message de requête de configuration de QoE de groupe, un contrôle d'autorisation de configuration de QoE selon un ID de demandeur inclus dans le message de requête.

5. Procédé selon la revendication 3, dans lequel les informations de configuration comprennent : un identifiant de groupe et un type de QoE correspondant à l'identifiant de groupe.

6. Procédé selon la revendication 5, dans lequel :
les informations de configuration comprennent en outre : un drapeau obligatoire de QoE de membre, indiquant s'il faut valider un type de QoE d'un utilisateur ; et
le procédé comprend en outre : valider (4-3), par le serveur de groupes de partage, un type de QoE d'un utilisateur devant être ajouté dans un groupe stocké dans le serveur de groupes de partage lorsque l'utilisateur est ajouté dans le groupe par l'intermédiaire du client de gestion de documents XML.

7. Procédé selon la revendication 6, dans lequel l'étape de validation par le serveur de groupes de partage du type de QoE de l'utilisateur devant être ajouté dans le groupe comprend :
comparer un niveau du type de QoE de l'utilisateur avec celui du type de QoE du groupe ; et
ajouter l'utilisateur dans le groupe si le niveau du type de QoE de l'utilisateur est supérieur ou égal à celui du type de QoE du groupe ; ou
rejeter l'ajout de l'utilisateur dans le groupe si le niveau du type de QoE de l'utilisateur est inférieur à celui du type de QoE du groupe.

8. Procédé selon la revendication 7, dans lequel :
lorsque l'utilisateur devant être ajouté dans le groupe appartient au même domaine que le serveur de groupes de partage, obtenir, par le serveur de groupes de partage, le type de QoE de l'utilisateur localement ;
lorsque l'utilisateur devant être ajouté dans le groupe n'appartient pas au même domaine que le serveur de groupes de partage, accéder, par le serveur de groupes de partage, aux informations de configuration de QoE d'utilisateur dans un domaine où l'utilisateur est situé pour obtenir le type de QoE de l'utilisateur ou fixer le type de QoE de l'utilisateur directement à un niveau minimum.

9. Procédé selon la revendication 1, dans lequel le serveur de contrôle de session de groupe déterminant le type de QoE final de la session de groupe selon des informations de type de QoE prédéfinies correspondant au groupe et au code de type de QoE initial comprend :
envoyer (9-6, 9-8), par le serveur de contrôle de session de groupe, un message d'invitation incluant un code de type de QoE d'invitation séquentiellement aux membres invités respectifs du groupe, le code de type de QoE d'invitation étant le code de type de QoE initial ; et
déterminer (9-10), par le serveur de contrôle de session de groupe, le type de QoE final de la session de groupe selon les niveaux de type de QoE inclus dans les messages de réponse reçus des membres invités respectifs.

10. Procédé selon la revendication 1, dans lequel le serveur de contrôle de session de groupe déterminant le type de QoE final de la session de groupe selon des informations de type de QoE prédéfinies correspondant au groupe et au code de type de QoE initial comprend :
après avoir reçu le message de requête de la session de groupe, déterminer, par le serveur de contrôle de session de groupe, un type de QoE d'invitation, et inclure (9-5) les informations de type de QoE d'invitation déterminé et les informations obligatoires de type de QoE de session dans un message d'invitation ;
après avoir reçu l'invitation du serveur de contrôle de session de groupe, déterminer, par les membres invités respectifs du groupe, s'il faut accepter l'invitation de session selon leurs propres informations de configuration de type de QoE et les informations de type de QoE d'invitation ; et
lorsque l'invitation de session est acceptée, retourner (9-7, 9-9) leurs propres informations de type de QoE au serveur de contrôle de session de groupe dans des messages de réponse.

11. Procédé selon la revendication 1, comprenant en outre :
configurer à l'avance des informations de mappage de QoE dans le serveur de contrôle de session de groupe, les informations de mappage de QoE comprenant la type de QoE et des paramètres de propriétés de session correspondant au type de QoE ;
demander les informations de mappage de QoE selon le type de QoE de la session de groupe, et obtenir les paramètres de propriétés de session, les paramètres de propriétés de session comprenant la qualité de service du réseau et des priorités de session ; et
configurer (9-10) les propriétés de la session établie selon les paramètres de caractéristiques de session.

12. Procédé selon la revendication 11, dans lequel l'étape de configuration des propriétés de la session établie selon les paramètres de propriétés de session comprend :
déterminer un niveau de qualité de service de la session établie selon des paramètres de qualité de service du réseau ; et
traiter de manière préférentielle une requête de session avec une priorité supérieure selon des paramètres de priorité de session.

13. Système permettant de mettre en oeuvre une qualité d'expérience d'une session de groupe, comprenant :
un dispositif utilisateur (S1) adapté pour lancer un message de requête pour une session de groupe, le message de requête incluant un code de type de QoE initial ;
un serveur de groupes de partage (S2), adapté pour stocker des informations de groupe, les informations de groupe comprenant des listes de membres de groupe et des informations de type de QoE correspondant au groupe ; et
un serveur de contrôle de session de groupe (S3), adapté pour déterminer un type de QoE final de la session de groupe selon les informations de type de QoE correspondant au groupe stockées dans le serveur de groupes de partage et au code de type de QoE initial, lorsque la session de groupe est établie ; configurer les propriétés de la session de groupe établie selon le type de QoE final correspondant au groupe ;
et envoyer un message d'invitation de session de groupe incluant le type de QoE final de la session de groupe aux utilisateurs invités.
